Europäisches Patentamt

(19) European Patent Office

Office européen des brevets

(11) Publication number: **0 139 491**

**A1**

(12) **EUROPEAN PATENT APPLICATION**

(21) Application number: **84306540.0**

(22) Date of filing: **26.09.84**

(51) Int. Cl.⁴: **F 16 H 37/04**

(30) Priority: **28.09.83 GB 8325912**

(43) Date of publication of application:
**02.05.85 Bulletin 85/18**

(84) Designated Contracting States:
**BE DE FR GB IT NL SE**

(71) Applicant: **BL TECHNOLOGY LIMITED**
**106 Oxford Road**
**Uxbridge Middlesex UB8 1EH(GB)**

(72) Inventor: **Strange, Victor Edward**
**13 Welford Road Shirley**
**Solihull West Midlands B90 3HX(GB)**

(74) Representative: **Waters, Jeffrey**
**ARG Patent Department Cowley Body Plant**
**Cowley Oxford OX4 5NL(GB)**

(54) **Multi-ratio rotary power transmission mechanisms.**

(57) A five speed ratio and reverse gearbox incorporates an input shaft 15, output shaft 18 and lay-shaft 23. The lay-shaft and its integral driving gears for first, second, third and fifth gear ratios are driven continuously from the input shaft through gears 26 and 27. Conventional synchronisers 38, 44 and 45 are provided to engage first, second and third driven gears 33, 34 and 35 respectively with the output shaft 18 to select any of these ratios. Fourth gear ratio is a direct drive from input shaft to output shaft through an over-running clutch 49 and synchroniser 46. Fifth gear ratio, incorporating lay-shaft gear 31 and output shaft gear 36, is established by engagement of wet clutch 51. Pump 62 supplies oil under pressure to clutch 51 but only when valve 63 is closed which in turn is only when fourth gear ratio has been selected.

./...

# MULTI-RATIO ROTARY POWER TRANSMISSION MECHANISMS

The invention relates to multi-ratio rotary power transmission mechanisms intended primarily for incorporation in the transmission path between an engine and the road wheels of a vehicle.

Such mechanisms, or gearboxes, normally provide two or three reduction ratios, a direct (1:1) ratio and an overdrive ratio. Other gearing in the drive path, normally associated with a differential gear unit, is normally selected so that the direct drive ratio provides maximum high speed performance for the vehicle and the overdrive ratio provides quiet, economical cruising with low engine wear when acceleration is not required. There is a tendency for the overdrive ratio to be used only in situations where a requirement for acceleration is unlikely to arise at short notice. This is because the driver of the vehicle would not wish to delay acceleration and wishes to avoid the time delay and inconvenience of engaging direct drive in place of overdrive. The effort associated with selection of the overdrive ratio is a further deterrent to its frequent use.

An object of the present invention is to provide a multi-ratio rotary power transmission mechanism in which changes between the highest ratio and the second highest ratio can be effected quickly and easily. Once this objective is achieved, greater advantage can be taken of the provision of an overdrive ratio.

In accordance with the present invention there is provided a multi-ratio rotary power transmission mechanism comprising: an output shaft; at least one driving shaft; and a plurality of driving connections of mutually different drive ratios each interposed, together with a respective selectively engageable coupling, between a driving shaft and the output shaft, wherein the driving connection associated with the second highest ratio incorporates an over-running clutch in series with its selectively engageable coupling and the selectively engageable coupling associated with the highest ratio driving connection is a hydraulically operable friction clutch connected to be operated by a source of pressurised lubricant within the transmission mechanism.

In order to engage the highest ratio when the second highest ratio is already engaged, all that is required is to engage the friction clutch. Thus the system is suitable for what is known as a hot shift, namely a change of ratio while power is being transmitted. A shift to the second highest ratio from the highest ratio can also be a hot shift, simply requiring the disengagement of the friction clutch. In this way, power is available immediately it is called for by depressing an accelerator pedal- and after a very short interval with a suitable control system the power is transmitted through the second highest rather than the highest ratio, providing improved acceleration.

Preferably the friction clutch is a multi-plate wet clutch. Preferably the hydraulic supply to the clutch includes a dump valve controlled by a mechanism for operating the couplings associated with ratios other than the highest ratio in such a way that the valve prevents pressure build-up in the clutch except when the coupling associated with the second highest ratio is engaged. This arrangement prevents accidental engagement of the highest ratio with a second ratio other than the second highest ratio even if there is a fault in the controls of the clutch.

Preferably an input shaft constitues the driving shaft for the second highest ratio and drives the output shaft directly (1:1 ratio) through its selectively engageable coupling and over-running clutch. Preferably the input shaft is in continuous driving connection with a lay-shaft which constitutes the driving shaft for ratios other than the second highest ratio.

Preferably the driving connections for ratios other than the second highest ratio each incorporate a gear rotatable with the lay-shaft in mesh with a gear rotatable with the output shaft. The selectively engageable couplings for ratios other than the highest ratio may be incorporated in synchroniser mechanisms.

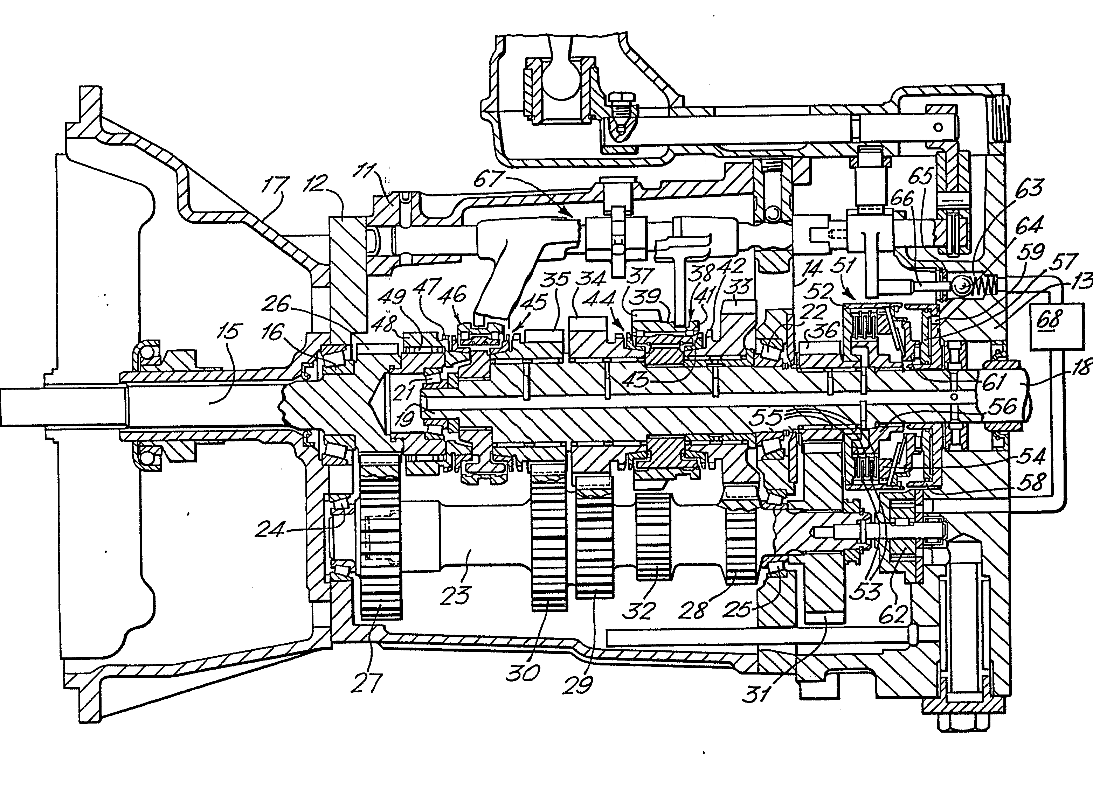

An embodiment of the invention will now be described by way of example only with reference to the accompanying drawing which is a diagrammatic section through a multi-ratio rotary power transmission according to the invention.

The multi-ratio rotary power transmission mechanism shown in the drawing is in most respects a conventional single lay-shaft five speed gearbox with direct fourth gear and an overdrive fifth gear ratio.

The gearbox incorporates a housing constituted by a main casting 11, an end cover 12 at the input end of the gearbox, an output side casting 13 and an intermediate bearing support wall 14. An input shaft 15 runs in a taper roller bearing 16 in end cover 12 and is arranged to be driven from a vehicle engine through a conventional single-plate dry clutch (not shown) to be located in a bell housing 17. An output shaft 18 is co-axial with the input shaft, has a nose 19 supported by a taper roller bearing 21 in the inner end of input shaft 15 and is also supported in wall 14 by a further taper roller bearing 22. A lay-shaft 23 has its axis parallel to but offset from the axis of the input and output shafts and runs in taper roller bearings 24 and 25

-4-

which respectively mount the lay-shaft within the end cover 12 and the intermediate bearing support wall 14.

Input shaft 15 drives lay-shaft 23 continuously through a gear-set constituted by gear 26 on the input shaft and gear 27 which effectively forms part of the lay-shaft 23 by being welded thereto. The lay-shaft constitutes a driving shaft for the output shaft 18 for first, second, third and fifth gear ratios (and reverse). The lay-shaft carries gears 28, 29, 30 and 31 which form input gears for first, second, third and fifth gear ratios respectively. A corresponding reverse input gear 32 is also carried on the lay-shaft. Gears 28 to 32 are integral with and thus permanently rotatable with the lay-shaft.

The output shaft 18 carries corresponding driven gears 33 to 36 which each co-operate respectively with one of the input gears 28 to 31 and are permanently in mesh with these gears 28 to 31. There is also a reverse driven gear 37. Driven gears 33 to 36 are in themselves free to rotate on the output shaft 18 but can each be locked to the output shaft for rotation therewith by a respective selectively engageable coupling.

The coupling for first gear is constituted by a conventional synchroniser mechanism 38 incorporating a sleeve 39 slidable on but rotatable with the driven shaft 18 and having internal dog teeth 41 for engagement with corresponding external dog teeth 42 on gear 33. The synchroniser also incorporates the usual cone arrangment 43 for synchronising the speeds of the driven shaft 18 and gear 33 as the sleeve is moved towards the gear. When the coupling constituted by dog teeth 41 and 42 is engaged, there is a continuous drive through the gearbox from input shaft 15 to output shaft 18 through gears 26, 27, 28 and 33 and the sleeve 39.

A second gear ratio synchroniser mechanism 44 corresponds to synchroniser mechanism 38 and incorporates the opposite end of sleeve 39 so that depending on the direction in which the sleeve is moved axially, either first or second gear ratio is engaged. Third gear ratio can also be engaged by a corresponding third gear synchroniser mechanism 45.

Engagement of fourth (direct) gear ratio is established by locking the input shaft 15 directly to the output shaft 18. This can be done by a synchroniser mechanism 46 having parts in common with synchroniser mechanism 45 and engaging dog teeth 47 on a driving ring 48. Driving ring 48 is in turn connected through an over-running clutch 49 to the input shaft 15. The over-running clutch allows drive to be transmitted from the input shaft 15 to the driving ring 48 but free-wheels in the opposite direction or allows the speed of driving ring 48 to exceed that of the input shaft 15 if the ring 48 is otherwise driven. Thus establishment of direct drive in the forward direction from input shaft 15 to output shaft 18 is through the over-running clutch 49, driving ring 48 and synchroniser mechanism 46.

To establish fifth gear ratio, that is overdrive ratio, it is necessary to lock gear 36 to shaft 18. For this purpose, a conventional multi-plate wet clutch 51 is provided. Clutch housing 52 is secured to gear 36 for rotation therewith and clutch plates 53 and pressure plate 54 are splined externally to the interior surface of clutch housing 52. Clutch plates 55 interleaved between plates 53 and pressure plate 54 are splined internally to a carrier 56 carried for rotation with output shaft 18. An annular piston 57 acting in an annular cylinder 58 can be pressurised through inlet 59 to drive the clutch plates 54 and 55 into mutual frictional engagement through a clamping mechanism 61. Thus when fluid under pressure is applied to inlet 59, fifth gear 36 drives output shaft 18 through clutch 51 to engage fifth gear ratio. This can be done without first disengaging fourth gear ratio because over-running clutch 49 simply over-runs. To re-engage fourth gear ratio after fifth ratio has been engaged, it is simply necessary to de-pressurise the clutch cylinder 58 through inlet 59. The rate of engagement and disengagement of the clutch 51 can be set to establish a smooth transition between fifth gear ratio and fourth gear ratio.

The supply of fluid under pressure for operation of clutch 51 is generated by a pump 62 driven from the lay-shaft 23. A dump valve 63 is constituted by a spring loaded ball 64 which engages against a seat 65 to close the valve. In the position shown, a valve lifting pin 66 has lifted ball 64 off its seat to prevent pressurisation and thus engagement of clutch 51.

A gear selector mechanism 67 which engages first, second, third and fourth gear ratios by controlling synchronisers 38, 44, 45 and 46 also operates lifting pin 66 and ensures that this pin is always lifted except when fourth ratio is selected.

Thus the dump valve 63 serves to inhibit pressurisation of friction clutch 51 except when fourth gear ratio is engaged. When fourth gear ratio is engaged, control of pressurisation of the clutch is effected by a control valve 68. When control valve 68 connects pump pressure to the clutch 51, the clutch is engaged and thus fifth gear ratio is engaged. When control valve 68 de-pressurises the clutch, the clutch is disengaged and fourth gear ratio becomes effective.

In a situation where fifth gear ratio is selected in this way by a manual operation of valve 68 by the vehicle driver, the engagement and disengagement of fifth gear can be effected quickly and easily without interruption of power transmission through the gearbox. This encourages extensive use of fifth gear and tends to result in economical quiet operation of the vehicle. However, it is preferred that engagement of fifth gear should occur automatically in response to vehicle operating parameters such as engine and vehicle speed and torque demand (measured by manifold depression). In such a case, depending on the settings of the control system, maximum use can be made of fifth gear and maximum economies can be achieved without any sacrifice of performance or a requirement for additional activity from the vehicle driver.

When the vehicle has been operating in fifth gear ratio and third gear ratio (or an even lower ratio) is selected manually for immediate rapid acceleration, it is important to de-pressurise the clutch 51 rapidly to ensure that there is not a transitional state in which fifth gear ratio and third (or a lower) gear ratio are engaged simultaneously. The dump valve 63 ensures the required rapid de-pressurisation of the clutch 51. This rapid dump of pressure is required with an automatically controlled fifth gear ratio even when the intended change is from fourth to third. This is because on releasing the accelerator to effect the ratio change, the control system automatically instigates a change from fourth to fifth as the drive is selecting third gear ratio.

Engagement of reverse gear is effected in conjunction with a further gear (not shown) which engages both gears 37 and 32 and thus reverses the direction of drive through these gears.

- 8 -    0139491

## CLAIMS

(1) A multi-ratio rotary power transmission mechanism comprising: an output shaft; at least one driving shaft; and a plurality of driving connections of mutually different drive ratios each interposed, together with a respective selectively engageable coupling, between a driving shaft and the output shaft, wherein the driving connection associated with the second highest ratio incorporates an over-running clutch in series with its selectively engageable coupling and the selectively engageable coupling associated with the highest ratio driving connection is a hydraulically operable friction clutch connected to be operated by a source of pressurised lubricant within the transmission mechanism.

(2) A transmission mechanism as claimed in claim 1 wherein the friction clutch is a multi-plate wet clutch.

(3) A transmission mechanism as claimed in claim 2 including a dump valve in the hydraulic supply to the clutch controlled by a mechanism for operating the couplings associated with ratios other than the highest ratio such that the valve prevents pressure build up in the clutch except when the coupling associated with the second highest ratio is engaged.

(4)    A transmission mechanism as claimed in any one of the preceding claims wherein an input shaft constitues the driving shaft for the second highest ratio and drives the output shaft directly (1:1 ratio) through its selectively engageable coupling and over-running clutch.

(5)    A transmission mechanism as claimed in claim 4 wherein the input shaft is in continuous driving connection with a lay-shaft which constitutes the driving shaft for ratios other than the second highest ratio.

(6)    A transmission mechanism as claimed in claim 5 wherein the driving connections for ratios other than the second highest ratio each incorporate a gear rotatable with the lay-shaft in mesh with a gear rotatable with the output shaft.

(7)    A transmission mechanism as claimed in claim 6 wherein the selectively engageable couplings for ratios other than the highest ratio are incorporated in synchroniser mechanisms.

1/1

0139491

**European Patent Office**

**EUROPEAN SEARCH REPORT**

Application number

## DOCUMENTS CONSIDERED TO BE RELEVANT

EP 84306540.0

| Category | Citation of document with indication, where appropriate, of relevant passages | Relevant to claim | CLASSIFICATION OF THE APPLICATION (Int. Cl.4) |
|---|---|---|---|
| A | <u>US - A - 2 916 942</u> (NERACHER et al.)<br>* Totality * | 1,4,5 | F 16 H 37/04 |
| A | <u>US - A - 4 403 526</u> (NUMAZAWA et al.)<br>* Totality * | 1,6,7 | |
| A | <u>DE - B - 1 119 679</u> (ZAHNRADFABRIK FRIEDRICHSHAFEN)<br>* Totality * | 2 | |
| A | <u>DE - A1 - 3 041 764</u> (TOYOTA)<br>* Totality * | | |
| A | <u>GB - A - 1 439 589</u> (GKN)<br>* Totality * | | TECHNICAL FIELDS SEARCHED (Int. Cl.4)<br><br>F 16 H 5/00<br>F 16 H 37/00 |
| A | <u>GB - A - 2 063 394</u> (TOYOTA)<br>* Totality * | | |
| A | <u>US - A - 4 344 337</u> (NAGASAKI et al.)<br>* Totality * | | |

The present search report has been drawn up for all claims

| Place of search | Date of completion of the search | Examiner |
|---|---|---|
| VIENNA | 06-12-1984 | SCHATEK |